# EUROPEAN PATENT APPLICATION

(11) **EP 2 712 832 A2**
(43) Date of publication of application: **02.04.2014**
(21) Application number: 13185118.0
(22) Date of filing: 19.09.2013
(51) Int. Cl.: B65H 54/48, B29C 45/00

(54) **Traverse drum, yarn winding device, and method of manufacturing traverse drum**

(30) Priority: 26.09.2012 JP 2012212859; 17.06.2013 JP 2013126647
(71) Applicant: Nimei Seiki Co., Ltd., Toki-city, Gifu 509-5142 (JP)
(72) Inventor: Hirukawa, Masao, Gifu, 509-5142 (JP); Tanaka, Katsuya, Gifu, 509-5142 (JP); Ichihara, Kazuki, Gifu, 509-5142 (JP)
(74) Representative: HOFFMANN EITLE

(57) **Abstract**

An undercut portion (31) is formed in a traverse groove (22) of a traverse drum (17). The undercut portion (31) has a portion whose surface on a center side of the drum main body (21) in an axial direction thereof is curved toward the center side as a position on the surface becomes deeper in a depth direction of the traverse groove (22). Because of this undercut portion (31), a yarn can be engaged with a surface of the traverse groove (22) under a suitable tension. Winding of the yarn into a package can be achieved without any problem of the yarn coming off the traverse groove (22) while being guided or the yarn not being smoothly fed from the traverse drum (17) and failing to be wound into the package.

## Description

### BACKGROUND OF THE INVENTION

### 1. Field of the Invention

The present invention relates to a traverse drum, a yarn winding device, and a method of manufacturing the traverse drum.

### 2. Description of the Related Art

In a yarn winding device such as an automatic winder that winds a yarn into a package, a traverse drum is pressed against the package and driven to rotate. The package rotates together with the traverse drum whereby the yarn is wound into the package. A traverse groove is provided on the peripheral surface of the traverse drum. The traverse groove creates an endless track. The yarn is guided along the traverse groove and is evenly wound into the package with respect to the axial direction of the package (See, for example, Japanese Patent Application Laid-open No. 2002-3080).

In such a yarn winding device, the yarn that is being guided tends to come off the traverse groove if the yarn is engaged too loosely with the traverse groove during rotation of the traverse drum. In contrast, if the yarn is engaged too tightly with the traverse groove, it makes feeding of the yarn from the traverse drum difficult, which may interfere with the winding of the yarn into the package. It is therefore desired to develop a traverse drum capable of engaging a yarn under a suitable tension.

### SUMMARY OF THE INVENTION

The present invention has been conceived to solve the above problems, and it is an object of the present invention to provide a traverse drum capable of engaging a yarn under a suitable tension, a yarn winding device incorporating such a traverse drum, and a method of manufacturing the traverse drum.

To solve the above problems, according to an aspect of the present invention there is provided a traverse drum that includes a drum main body that is made of a resin and that has a traverse groove for guiding and traversing a yarn. A surface of the traverse groove has an undercut portion. The undercut portion includes a portion whose surface on a center side of the drum main body in an axial direction thereof is curved toward the center side as a position on the surface becomes deeper in a depth direction of the traverse groove.

According to still another aspect of the present invention, there is provided a yarn winding device including a winding section that includes the above traverse drum. The winding section winds the yarn, which is being guided by the traverse drum, into a package.

According to another aspect of the present invention, there is provided a method of manufacturing a traverse drum that includes a drum main body made of a resin and having a traverse groove for guiding and traversing a yarn. The method includes forming the drum main body and the traverse groove by using a cavity made of a silicon resin. During the forming, an undercut portion, which has a portion whose surface on a center side of the drum main body in an axial direction thereof is curved toward the center side as a position on the surface becomes deeper in a depth direction of the traverse groove, is formed simultaneously in a surface of the traverse groove.

The above and other objects, features, advantages and the technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a diagram of a peripheral surface of a traverse drum according to an embodiment of the present invention when viewed from one side;
FIG. 2 is a diagram of the peripheral surface of the traverse drum shown in FIG. 1 according to the embodiment when viewed from another side;
FIG. 3 is a perspective view of the traverse drum shown in FIG. 1 according to the embodiment, with a portion of the traverse drum cut away;
FIG. 4A is a cross section of an example of a traverse groove around an undercut portion;
FIG. 4B is a cross section of another example of the traverse groove around the undercut portion;
FIG. 4C is a cross section of still another example of the traverse groove around the undercut portion; and
FIG. 5 is a perspective view of a cavity used in a method of manufacturing the traverse drum according to the embodiment, with a portion thereof cut away.

### DETAILED DESCRIPTION OF PREFERRED EMBODIMENTS

Exemplary embodiments of a traverse drum, a yarn winding device, and a method of manufacturing the traverse drum according to the present invention are explained in detail below with reference to the accompanying drawings.

A traverse drum according to an embodiment of the present invention is explained below. The traverse drum is used in a yarn winding device that winds a yarn fed from a supply bobbin into a package. Supply bobbins prepared in a previous process by a spinning frame are set on trays, for example, and transported from the spinning frame to the yarn winding device. Generally, multiple such yarn winding devices are arranged side by side to form an automatic winder.

In the yarn winding device, a bobbin supporting section, a yarn unwinding assisting device, a pre-clearer, a gate-type tenser, a tension sensor, a lower yarn catcher, a splicer, a cutter, a yarn clearer, an upper yarn catcher, and a winding section are arranged in this order from an upstream side (from a bottom side, for example) along a yarn running route (i.e., a yarn path). These components are mounted on a main body of the yarn winding device. The yarn winding device also includes a control section that controls each component of the yarn winding device, and a display that displays an operational state and the like of the yarn winding device. The control section exchanges various kinds of information regarding a winding operation with a controller that controls the entire automatic winder.

The bobbin supporting section supports the supply bobbin upright. The yarn unwinding assisting device controls, with a cylindrical member arranged above the supply bobbin, a balloon of the yarn unwound from the supply bobbin. The gate-type tenser holds the yarn in a zigzag pattern with a pair of gates, a fixed comb-tooth gate and a movable comb-tooth gate, thereby applying a predetermined tension to the running yarn. The tension sensor measures the tension applied to the yarn by the gate-type tenser.

The pre-clearer regulates passage of large yarn defects, which are larger than a predetermined value, with a pair of regulating members arranged a predetermined distance apart from each other across the yarn path. The yarn clearer detects small yarn defects, such as slub, during winding of the yarn. The cutter cuts the yarn when the yarn clearer detects such a yarn defect. When the cutter has cut the yarn or when the yarn has run out (hereinafter, "when the yarn is cut"), the splicer joins the yarn end from the supply bobbin and the yarn end from the package (i.e., joins the yarn ends).

The lower yarn catcher is pivotable upwardly and downwardly around a shaft line, and has a suction vent at its pivoting end. The suction vent of the lower yarn catcher is freely positionable between a position above the splicer and a position below the pre-clearer. The upper yarn catcher is pivotable upwardly and downwardly around a shaft line, and has a suction vent at its pivoting end. The suction vent of the upper yarn catcher is freely positionable between a position below the splicer and the winding section. With such an arrangement, the lower yarn catcher is positioned at a downwardly pivoted position to suck the yarn end from the supply bobbin through the suction vent, and then pivots upwardly to deliver the yarn end from the supply bobbin to the splicer. Meanwhile, the upper yarn catcher pivots upwardly to suck the yarn end from the package through the suction vent, and then pivots downwardly to deliver the yarn end from the package to the splicer.

The winding section winds the yarn that has been unwound from the supply bobbin into the package, forming a fully wound package having a predetermined amount of yarn. The winding section includes a traverse drum having a traverse groove 22 formed therein, and a cradle that rotatably supports the package. The cradle brings the surface of the package into contact with the surface of the traverse drum under an appropriate pressure during winding of the yarn. Accordingly, when the winding section drives the traverse drum to rotate, the package is rotated following the rotation of the traverse drum. As the traverse drum and the package rotate, the yarn is wound into the package while being traversed in a predetermined width. When the yarn is cut, the cradle lifts the package up to detach the surface of the package from the surface of the traverse drum, brakes the package, and brings the rotation of the package to a halt.

The cradle includes a pair of cradle arms. A package holder is mounted on one cradle arm, while another package holder is mounted on the other cradle arm, and these package holders hold the package rotatably around the rotational axis of the package.

Next, the traverse drum is explained in detail.

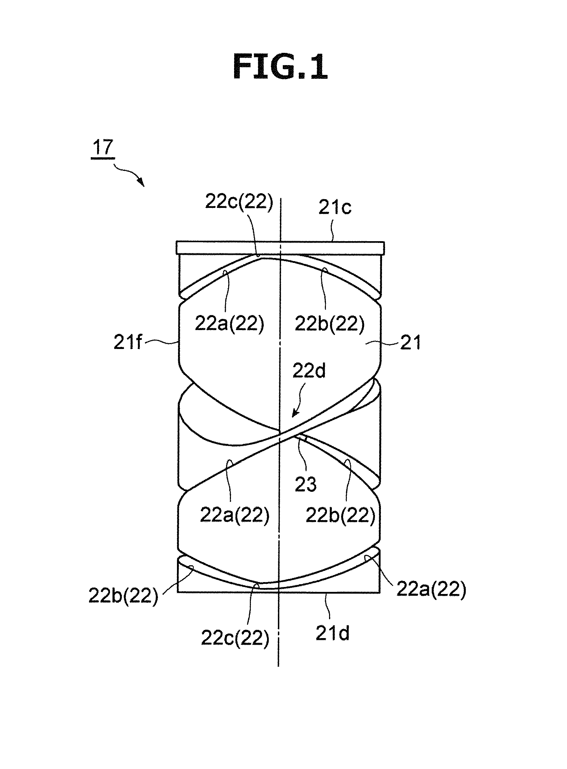

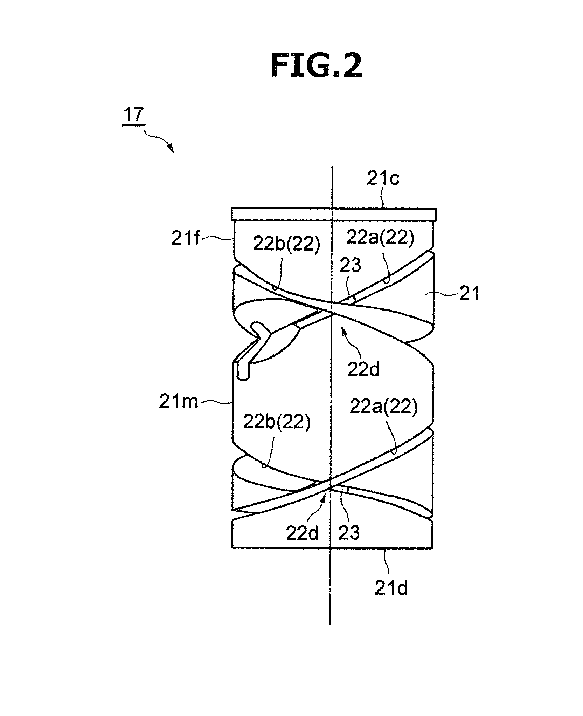

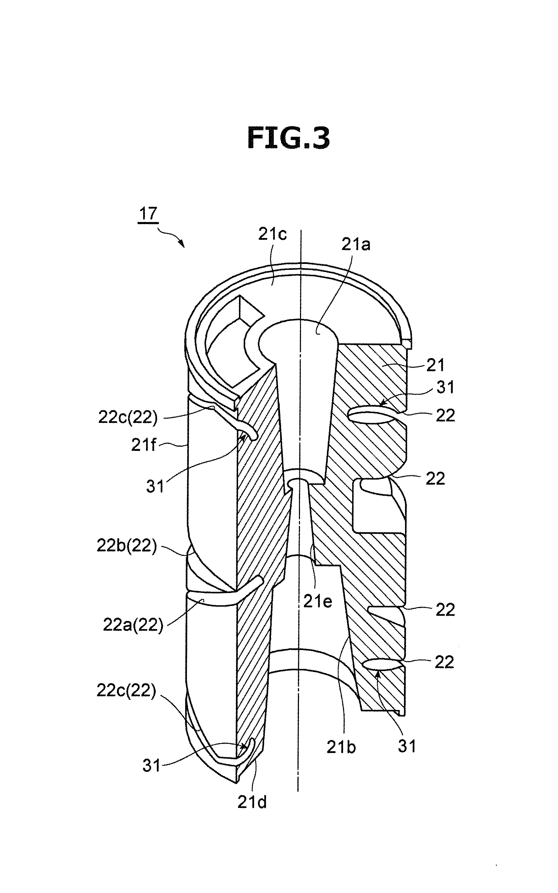

FIG. 1 is a diagram of the peripheral surface of the traverse drum when viewed from one side, and FIG. 2 is a diagram of the peripheral surface of the traverse drum when viewed from another side. FIG. 3 is a perspective view of the traverse drum a portion of which is cut away. As shown in these drawings, a traverse drum 17 includes a substantially cylindrical drum main body 21. The drum main body 21 is formed of, for example, a resin of polyurethane mixed with aluminum hydroxide by using a mold. A plating layer, such as a nickel plating layer or a chrome plating layer, is formed on a surface of the drum main body 21 including an inner surface of the later discussed traverse groove 22.

As shown in FIG. 3, when cutting out with a mold, a space 21a and a space 21b having circular cross-sections are formed in a central portion of the drum main body 21. The space 21a is tapered, spreading toward a first end surface 21c of the drum main body 21 in an axial direction thereof. The space 21b spreads toward a second end surface 21d in a direction opposite to the direction of spread of the space 21a. A tunnel 21e is arranged between a bottom of the space 21a and a bottom of the space 21b. The space 21a and the space 21b communicate with each other via this tunnel 21e. The tunnel 21e is also tapered, spreading toward the space 21b.

As mentioned above, a traverse groove 22 is formed in a peripheral surface 21f of the drum main body 21. The traverse groove 22 includes, as shown in FIGS. 1 and 2, a grooved portion 22a for guiding the yarn to a first side in the axial direction of the drum main body 21 when the traverse drum 17 rotates, a grooved portion 22b for guiding the yarn to a second side, and a grooved portion 22c (reverse grooved portion) for reversing a yarn guiding direction. The grooved portion 22a, the grooved portion 22b, and the grooved portion 22c form an endless track in the drum main body 21. At crossing portions 22d of the grooved portion 22a and the grooved portion 22b, metal chips 23 or the like are fixed if necessary. These chips 23 ensure the strength of the crossing portions 22d.

An undercut portion 31 is formed in the grooved portion 22c of the traverse groove 22, as shown in FIG. 3. Inside the traverse groove 22, the undercut portion 31 has a portion whose surface on the center side of the drum main body 21 (hereinafter, "center-side surface") in the axial direction thereof is curved toward the center side as a position on the center-side surface becomes deeper in the depth direction of the traverse groove 22. The shape of a surface on the end portion side of the drum main body 21 (hereinafter, "end-side surface") in the axial direction can be suitably designed inside the traverse groove 22 in accordance with the specifications.

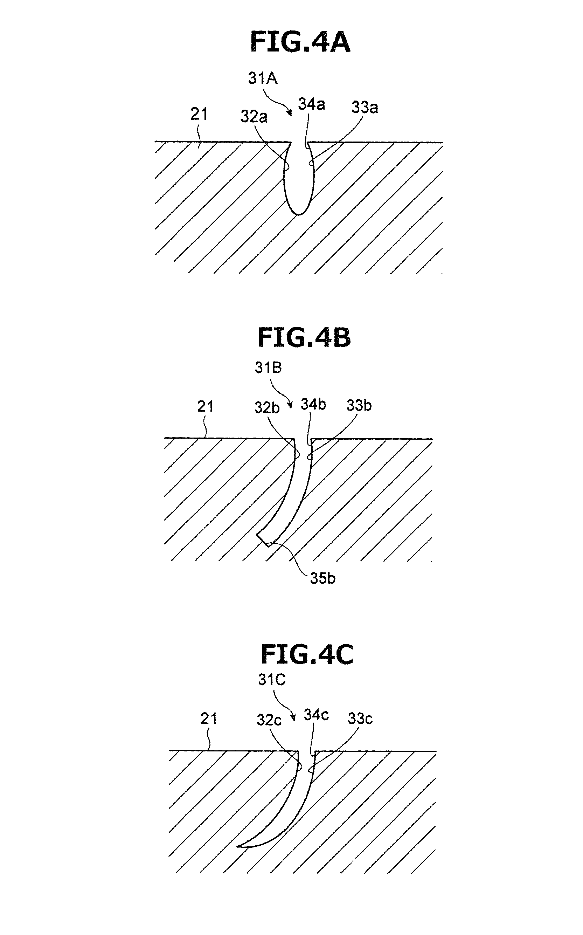

FIGS. 4A to 4C show examples of the traverse groove 22 around the undercut portion 31 in cross section. In an undercut portion 31A shown in FIG. 4A, a center-side surface 32a is curved and bulging toward the center side of the drum main body 21 in the axial direction thereof, while an end-side surface 33a is curved and bulging toward an end side of the drum main body 21 in the axial direction. This makes the width of a middle portion of the traverse groove 22 larger than the width of an open end 34a thereof. In an undercut portion 31B shown in FIG. 4B, a center-side surface 32b and an end-side surface 33b have the same curvature, both being curved and bulging toward the end side of the drum main body 21 in the axial direction thereof. The width of the traverse groove 22 is substantially the same from an open end 34b to a bottom 35b. In an undercut portion 31C shown in FIG. 4C, a center-side surface 32c and an end-side surface 33c have different curvatures, both being curved and bulging toward the end side of the drum main body 21 in the axial direction thereof. The curvature of the center-side surface 32c is larger than that of the end-side surface 33c, and therefore the width of the traverse groove 22 is reduced gradually from an open end 34c to the middle portion as a position on the traverse groove 22 becomes deeper in the depth direction.

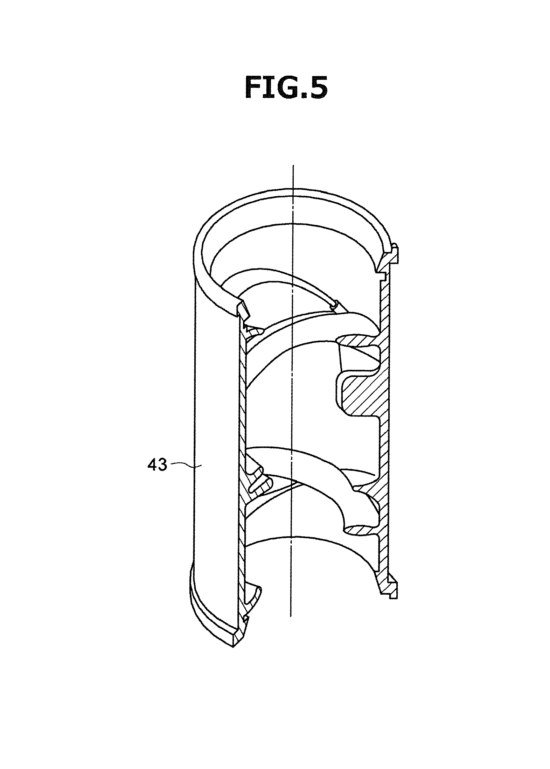

How the traverse drum 17 is produced is now explained. First, a master mold of the traverse drum 17 is positioned inside a substantially cylindrical casing, and liquid silicon resin is injected into a gap between the casing and the master mold through an injection hole provided in the casing. The master mold is taken out of the casing after a predetermined period of time elapses, and a cavity, which is formed around the periphery of the master mold by cross-linking of the silicon resin, is elastically deformed and detached from the master mold. A cavity (die) 43 of the silicon resin is thereby obtained, as shown in FIG. 5.

Next, the cavity 43 is positioned inside the casing, and the casing is set on a turntable. A mixed paste of aluminum hydroxide, polyurethane resin, and a curing agent is injected into the cavity 43 through the injection hole provided in the upper portion of the casing. The injection is performed while the turntable is turning. After the injection is over, upon completion of a catalyst action, the drum main body 21 is molded inside the cavity 43. Thereafter, the casing is removed from the drum main body 21 with the cavity 43 attached thereon, and then the cavity 43 is detached from the outer periphery of the drum main body 21. Because the cavity 43 is formed of a soft silicon resin, the cavity 43 can be elastically deformed and readily detached from the undercut portion 31 of the traverse groove 22. Consequently, the undercut portion 31 can be formed simultaneously at the formation of the drum main body 21 and the traverse groove 22.

After completion of the molding of the drum main body 21, the metal chips 23 are fixed at the crossing portions 22d of the grooved portion 22a and the grooved portion 22b. Finally, a copper plating layer, a nickel plating layer, a chrome plating layer, and the like are sequentially deposited on the peripheral surface 21f of the drum main body 21, the surface of the traverse groove 22, the first end surface 21c, and the second end surface 21d. The traverse drum 17 as shown in FIGS. 1 to 3 is thereby completed.

As explained above, the traverse groove 22 of the traverse drum 17 has the undercut portion 31. The undercut portion 31 has a portion whose surface on the center side of the drum main body 21 in the axial direction thereof is curved toward the center side as a position on the surface becomes deeper in the depth direction of the traverse groove 22. With this undercut portion 31, the yarn can be engaged with the surface of the traverse groove 22 under a suitable tension. Consequently, the winding of the yarn into the package can be achieved without any problems of the yarn coming off the traverse groove 22 while being guided or the yarn not being smoothly fed from the traverse drum 17 and failing to be wound into a package.

In the traverse drum 17, the undercut portion 31 is formed in the grooved portion 22c of the traverse groove 22 for reversing the yarn guiding direction. The yarn tends to come off the traverse groove 22 particularly at the grooved portion 22c for reversing the yarn guiding direction. With the undercut portion 31 in the grooved portion 22c, the yarn is effectively prevented from coming off the traverse groove 22.

The drum main body 21 and the traverse groove 22 are formed by using the silicon resin cavity 43, and the undercut portion 31 is also formed by using this cavity 43 simultaneously at the formation of the drum main body 21 and the traverse groove 22. The drum main body 21 with the traverse groove 22 therein can be formed more easily than when forming the drum main body 21 first and then forming the traverse groove 22 therein. The silicon resin cavity 43 can be deformed when the mold is removed, and therefore the undercut portion 31 can be easily shaped and formed.

The present invention is not limited to the above embodiment. In the above embodiments, the traverse drum 17 is applied to the yarn winding device of the automatic winder; however, the traverse drum 17 is also applicable to a yarn winding device of a machine including, for example, a spinning device. Furthermore, in the above embodiments, the undercut portion 31 is formed only in the grooved portion 22c that functions to reverse the yarn guiding direction; however, the undercut portion 31 can be formed in other grooved portions of the traverse groove 22, if necessary.

According to an aspect of the present invention there is provided a traverse drum that includes a drum main body that is made of a resin and that has a traverse groove for guiding and traversing a yarn. A surface of the traverse groove has an undercut portion. The undercut portion includes a portion whose surface on a center side of the drum main body in an axial direction thereof is curved toward the center side as a position on the surface becomes deeper in a depth direction of the traverse groove.

In this traverse drum, the traverse groove includes the undercut portion, and the undercut portion includes a portion whose surface on the center side of the drum main body in the axial direction thereof is curved toward the center side as a position on the surface becomes deeper in the depth direction of the traverse groove. Because of this undercut portion, the yarn can be engaged with the surface of the traverse groove under a suitable tension. Consequently, winding of the yarn into a package can be completed without any problems such as the yarn coming off the traverse groove while being guided and the yarn not being smoothly fed from the traverse drum and failing to be wound into the package.

It is preferable that the traverse groove has a reverse grooved portion for reversing a yarn guiding direction, and that the undercut portion is formed at least in the reverse grooved portion. The yarn tends to come off the traverse groove particularly at the reverse grooved portion that has a function of reversing the yarn guiding direction. By forming the undercut portion in the reverse grooved portion, the yarn can be effectively prevented from coming off the traverse groove.

It is preferable that the drum main body and the traverse groove are formed by using a cavity made of a silicon resin, and that the undercut portion is formed simultaneously at formation of the drum main body and the traverse groove by using the cavity. The drum main body having the traverse groove therein can be formed more easily than when forming the drum main body first and then forming the traverse groove therein. The cavity is formed of a silicon resin, and therefore can be deformed when the mold is removed. The undercut portion can be thereby easily shaped.

It is preferable that the surface of the undercut portion on the center side of the drum main body in the axial direction is curved and bulging toward the center side, and that a surface of the undercut portion on an opposite side from the center side is curved and bulging toward an end side of the drum main body in the axial direction making a width of a middle portion of the undercut portion larger than a width of an open end of the undercut portion. With the undercut portion having such a structure, the yarn can be engaged with the surface of the traverse groove under a still more suitable tension.

It is preferable that the surface of the undercut portion on the center side and a surface of the undercut portion on an opposite side from the center side are curved and bulging with the same curvature toward an end side of the drum main body in the axial direction, making a width of the undercut portion substantially the same from an open end through a bottom of the undercut portion. With the undercut portion having such a structure, the yarn can be engaged with the surface of the traverse groove under a still more suitable tension.

It is preferable that the surface of the undercut portion on the center side and a surface of the undercut portion on an opposite side from the center side are curved and bulging with different curvatures toward an end side of the drum main body in the axial direction, with the curvature of the surface on the center side being larger than the curvature of the surface on the opposite side, and a width of a middle portion of the undercut portion is thereby reduced compared to a width of an open end of the undercut portion as a position on the surface becomes deeper in the depth direction. With the undercut portion having such a structure, the yarn can be engaged with the surface of the traverse groove under a still more suitable tension.

It is preferable that a plating process is performed on the surface of the traverse groove. With the plating process, the strength of the traverse groove can be improved.

According to still another aspect of the present invention, there is provided a yarn winding device including a winding section that includes the above traverse drum. The winding section winds the yarn, which is being guided by the traverse drum, into a package.

In this yarn winding device, the traverse groove of the traverse drum has the undercut portion, and a surface of the undercut portion on the center side of the drum main body in the axial direction thereof is curved toward the center side as a position on the surface becomes deeper in the depth direction of the traverse groove. With such an undercut portion, the yarn can be engaged with the surface of the traverse groove under a suitable tension. Consequently, winding of the yarn into a package can be completed without any problems such as the yarn coming off the traverse groove while being guided and the yarn not being smoothly fed from the traverse drum and failing to be wound into the package.

According to another aspect of the present invention, there is provided a method of manufacturing a traverse drum that includes a drum main body made of a resin and having a traverse groove for guiding and traversing a yarn. The method includes forming the drum main body and the traverse groove by using a cavity made of a silicon resin. During the forming, an undercut portion, which has a portion whose surface on a center side of the drum main body in an axial direction thereof is curved toward the center side as a position on the surface becomes deeper in a depth direction of the traverse groove, is formed simultaneously in a surface of the traverse groove.

With this method of manufacturing the traverse drum, the drum main body having the traverse groove therein can be formed more easily than when forming the drum main body first and then forming the traverse groove therein. The cavity that is made of a silicon resin can be deformed when the mold is removed, and therefore the undercut portion can be easily shaped.

According to the present invention, the yarn can be engaged under a suitable tension.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching of the claims.

## Claims

1. A traverse drum (17) comprising a drum main body (21) that is made of a resin and that has a traverse groove (22) for guiding and traversing a yarn,
a surface of the traverse groove (22) having an undercut portion, the undercut portion (31) includes a portion whose surface on a center side of the drum main body (21) in an axial direction thereof is curved toward the center side as a position on the surface becomes deeper in a depth direction of the traverse groove (22).

2. The traverse drum (17) according to Claim 1, wherein
the traverse groove (22) has a reverse grooved portion (22c) for reversing a yarn guiding direction, and
the undercut portion (31) is formed at least in the reverse grooved portion (22c).

3. The traverse drum (17) according to Claim 1 or 2, wherein
the drum main body (21) and the traverse groove (22) are formed by using a cavity (43) made of a silicon resin, and
the undercut portion (31) is formed simultaneously at formation of the drum main body (21) and the traverse groove (22) by using the cavity (43).

4. The traverse drum (17) according to any one of Claims 1 to 3, wherein the surface of the undercut portion (31A) on the center side of the drum main body (21) in the axial direction is curved and bulging toward the center side, and a surface of the undercut portion (31A) on an opposite side from the center side is curved and bulging toward an end side of the drum main body (21) in the axial direction making a width of a middle portion of the undercut portion (31A) larger than a width of an open end of the undercut portion (31A).

5. The traverse drum (17) according to any one of Claims 1 to 3, wherein the surface of the undercut portion (31B) on the center side and a surface of the undercut portion (31B) on an opposite side from the center side are curved and bulging with the same curvature toward an end side of the drum main body (21) in the axial direction, making a width of the undercut portion (31B) substantially the same from an open end through a bottom of the undercut portion (31B).

6. The traverse drum (17) according to any one of Claims 1 to 3, wherein the surface of the undercut portion (31C) on the center side and a surface of the undercut portion (31C) on an opposite side from the center side are curved and bulging with different curvatures toward an end side of the drum main body (21) in the axial direction, with the curvature of the surface on the center side being larger than the curvature of the surface on the opposite side, and a width of a middle portion of the undercut portion (31C) is thereby reduced compared to a width of an open end of the undercut portion (31C) as a position on the surface becomes deeper in the depth direction.

7. The traverse drum (17) according to any one of Claims 1 to 6, wherein a plating process is performed on the surface of the traverse groove (22).

8. A yarn winding device comprising a winding section that includes the traverse drum (17) according to any one of Claims 1 to 7,
wherein the winding section winds the yarn, which is being guided by the traverse drum (17), into a package.

9. A method of manufacturing a traverse drum (17) that includes a drum main body (21) made of a resin and having a traverse groove (22) for guiding and traversing a yarn, the method comprising:
forming the drum main body (21) and the traverse groove (22) by using a cavity (43) made of a silicon resin,
wherein, during the forming, an undercut portion (31), which has a portion whose surface on a center side of the drum main body (21) in an axial direction thereof is curved toward the center side as a position on the surface becomes deeper in a depth direction of the traverse groove (22), is formed simultaneously in a surface of the traverse groove (22).
